# FASCICULE DE BREVET EUROPEEN

(11) **EP 3 458 767 B1**
(45) Date de publication et mention de la délivrance du brevet: **12.08.2020**
(21) Numéro de dépôt: 17731284.0
(22) Date de dépôt: 18.05.2017
(51) Int. Cl.: F17C 1/00

(54) **RESERVOIR EN MATÉRIAU COMPOSITE POUR CONTENIR UN FLUIDE SOUS PRESSION**
TANK AUS VERBUNDMATERIAL FÜR DIE AUFNAHME VON FLÜSSIGKEIT UNTER DRUCK
VESSEL MADE OF COMPOSITE MATERIAL FOR CONTAINING A PRESSURISED FLUID

(30) Priorité: 19.05.2016 EP 16170389
(43) Date de publication de la demande: 27.03.2019
(73) Titulaire: Rocher, Gilles, 1052 Le Mont-sur-Lausanne (CH)
(72) Inventeur: Rocher, Gilles, 1052 Le Mont-sur-Lausanne (CH)
(74) Mandataire: Micheli & Cie SA
(86) Numéro de dépôt international: PCT/IB2017/052928
(87) Numéro de publication internationale: WO 2017/199193

(56) Documents cités:
- DE-A1-102008 059 591
- FR-A- 903 442
- FR-A1- 2 923 575
- US-A- 2 744 043
- US-A- 3 282 757
- US-A- 3 508 677
- US-A1- 2012 000 916
- US-A1- 2015 292 677

## Description

### DOMAINE DE L'INVENTION

La présente invention concerne un réservoir en matériau composite pour contenir un fluide sous pression, le réservoir comportant un élément tubulaire, un embout axial inséré dans une extrémité de l'élément tubulaire, et une couche circonférentielle formée de fibres saturées de résine, la couche circonférentielle enveloppant l'élément tubulaire et l'embout axial. Un tronçon au moins de l'embout axial possède une forme qui va en s'amincissant en direction de l'extérieur, et l'extrémité de la paroi de l'élément tubulaire présente un rétrécissement de sorte qu'elle vient se plaquer contre la surface du tronçon dont la forme va en s'amincissant. La présente invention concerne également un procédé pour réaliser un réservoir en matériau composite conforme à la définition ci-dessus.

### ART ANTERIEUR

On connait déjà des réservoirs en matériau composite, par exemple de US2012/000916 A1. Le document de brevet FR 2 923 575 en particulier décrit un réservoir pour contenir un fluide sous pression qui correspond à la définition donnée en préambule. Dans ce réservoir connu, l'élément tubulaire est constitué par un cylindre en polyamide 6, et les deux embouts qui sont insérés dans les extrémités de l'élément tubulaire sont en alliage d'aluminium. De façon classique, au moins un des deux embouts est muni d'une interface d'entrée/sortie comportant une valve. Le document susmentionné enseigne que, lors de la fabrication du réservoir, on produit un rétrécissement de la paroi du cylindre en polyamide, à chacune de ses extrémités, grâce à un procédé de fluotournage. Les extrémités de l'élément tubulaire peuvent ainsi être conformées sur les deux embouts.

Selon le document susmentionné, la couche structurelle est ensuite réalisée en enroulant simultanément deux rubans comprenant chacun un grand nombre de fibres imprégnées de résine thermodurcissable. Les deux rubans sont enroulés en hélice autour de l'élément tubulaire, de manière sensiblement symétrique par rapport à l'axe de l'élément tubulaire. De manière générale, la réalisation d'une couche structurelle de la coque d'un réservoir, en ayant recours à la technique d'enroulement hélicoïdal décrite dans le document de brevet susmentionné, présente certains désavantages.

Premièrement, toutes les fibres des couches hélicoïdales nécessaires pour tenir les embouts passent par la partie cylindrique du réservoir qui s'en retrouve surdimensionnée. De plus l'accumulation de fibres dans la région des embouts contribue à l'excédent de matière utilisé par rapport à ce qui serait strictement nécessaire d'un point de vue structurel.

Deuxièmement, on a l'habitude de multiplier les couches d'enroulement hélicoïdal superposées en commençant par les couches dont l'orientation s'écarte le moins de la direction axiale du réservoir, de manière à bien retenir les embouts et éviter leur éjection sous l'effet de la pression du fluide comprimé dans le réservoir. Du fait de la multiplication des couches d'enroulement, le procédé d'enroulement hélicoïdal implique un très grand nombre de croisements de fibres qui constituent ainsi une structure similaire à celle d'un tissus où les fibres ne sont pas rectilignes mais sont ondulées par le passage en dessous et en dessus d'autres fibres. Or, il est connu dans l'usage des matériaux composites, qu'une structure tissée est moins performante, en traction particulièrement, qu'une structure unidirectionnelle ou multiaxiale dans laquelle les fibres ne présentent pas d'ondulation. Un procédé de mise en œuvre sans croisement et donc sans ondulation des fibres permettrait d'exploiter de manière plus optimisée le potentiel de performance des fibres de renfort.

Troisièmement, le procédé d'enroulement de filaments, s'il est automatisable, et relativement rapide pour des réservoirs de petites dimensions, devient très inefficace pour des réservoirs de grande longueur, car la machine d'enroulement passe beaucoup de temps à faire des allers et retours pour bobiner des fibres autours des embouts pour une quantité de matière bobinée par unité de temps très faible. Un procédé continu ou semi-continu permettant de déposer la quantité nécessaire de fibres et de résine en un seul passage ou en un nombre limité de passages représenterait un gain considérable de productivité.

D'autre part, selon le document de brevet FR 2 923 575, la résine utilisée pour servir de matrice aux fibres de la couche structurelle est une résine thermodurcissable. Le type de résine thermodurcissable le plus couramment utilisé pour la réalisation de réservoirs est la résine époxyde, or cette dernière nécessite d'extrêmes précautions tant dans son transport, stockage et préparation que dans son cycle de cuisson pour obtenir les performances attendues. De plus, les résines thermodurcissables ne sont pas recyclables. Il serait avantageux tant du point de vue de la mise en œuvre que de celui la recyclabilité, d'utiliser une résine de la famille des thermoplastiques. Toutefois, les résines thermoplastiques doivent être chauffées au-dessus de leur température de fusion pour être rendues plus fluides et faciliter leur mise en œuvre et l'imprégnation des fibres. Néanmoins, elles restent souvent plus visqueuses que les résines époxy et génèrent souvent plus de porosités dans la structure composite.

### BREF EXPOSE DE L'INVENTION

Un but de la présente invention est de remédier aux inconvénients de l'art antérieur qui viennent d'être décrits. Conformément à un premier aspect de l'invention, celle-ci atteint son but en fournissant un réservoir en matériau composite conforme à la revendication 1 annexée. Conformément à un second aspect de l'invention, celle-ci atteint son but en fournissant un procédé pour réaliser un réservoir en matériau composite conforme à la revendication 10 annexée.

Dans la présente description, l'expression « fibres longitudinales » se réfère à des fibres qui sont orientées parallèlement à l'axe de l'élément tubulaire, et l'expression « fibres circonférentielles » se réfère à des fibres dont la trajectoire est constituée d'une suite de spires, chaque spire s'étendant dans un plan sensiblement perpendiculaire à l'axe de l'élément tubulaire.

On comprendra que, conformément à l'invention, les fibres de la couche longitudinale de l'élément tubulaire ont toutes la même orientation longitudinale. De plus, les fibres de la couche circonférentielle ont toutes la même orientation circonférentielle. Un avantage de l'invention est donc qu'elle autorise de n'utiliser que la quantité de fibres strictement nécessaire pour permettre au réservoir de résister à la pression du fluide contenu à l'intérieur. Il en résulte une économie de matière substantielle.

On comprendra en outre que, les fibres d'une même couche étant orientées parallèlement, le réservoir de l'invention se prête à une réalisation sans croisement et donc sans ondulations des fibres. Un avantage de cette caractéristique est qu'elle permet d'exploiter de manière plus optimisée le potentiel de performance des fibres de renfort.

Selon un mode de réalisation avantageux de l'invention, les résines qui imprègnent les fibres de la couche circonférentielle et les fibres de la couche longitudinale de l'élément tubulaire sont des résines thermoplastiques. En effet, on peut comprendre que l'absence de croisement de fibres dans le réservoir de l'invention permet d'utiliser des résines thermoplastiques tout en limitant le risque de porosités.

### BREVE DESCRIPTION DES FIGURES

D'autres caractéristiques et avantages de la présente invention apparaîtront à la lecture de la description qui va suivre, donnée uniquement à titre d'exemple non limitatif, et faite en référence aux dessins annexés dans lesquels :
- la figure 1A est une vue en coupe transversale d'un réservoir en matériau composite conforme à un premier mode de réalisation de l'invention ;
- la figure 1B est une vue partielle en coupe longitudinale du réservoir de la figure 1A ;
- la figure 2 est un schéma de principe illustrant comment les onglets que présente une extrémité de l'élément tubulaire sont rabattus sur un tronçon convexe d'un embout pour constituer une extrémité d'un réservoir selon une variante particulière du premier mode de réalisation de l'invention ;
- la figure 3 est un schéma de principe illustrant comment les onglets que présente une extrémité de l'élément tubulaire sont rabattus sur un tronçon conique d'un embout pour constituer une extrémité d'un réservoir selon une deuxième variante particulière du premier mode de réalisation de l'invention ;
- la figure 4 est une représentation schématique en perspective d'un appareillage permettant la production en continu de l'élément tubulaire du réservoir de l'invention ;
- les figures 5A et 5B sont des représentations schématiques en perspective de l'opération d'enroulement circonférentiel pour réaliser la couche circonférentielle d'un réservoir selon la deuxième variante du premier mode de réalisation de l'invention ;
- la figure 6 est une vue partielle en perspective montrant un tronçon médian d'un réservoir selon une première variante d'un deuxième mode de réalisation de l'invention ;
- la figure 7 est une vue partielle en coupe longitudinale du réservoir de la figure 6 au niveau d'une bague intérieure prévue pour recevoir un dispositif de surpression ;
- les figures 8A et 8B sont des vues partielles en coupe longitudinale semblables à la figure 7, mais montrant un réservoir selon une deuxième variante du deuxième mode de réalisation de l'invention.

### DESCRIPTION DETAILLEE DE MODES DE REALISATION

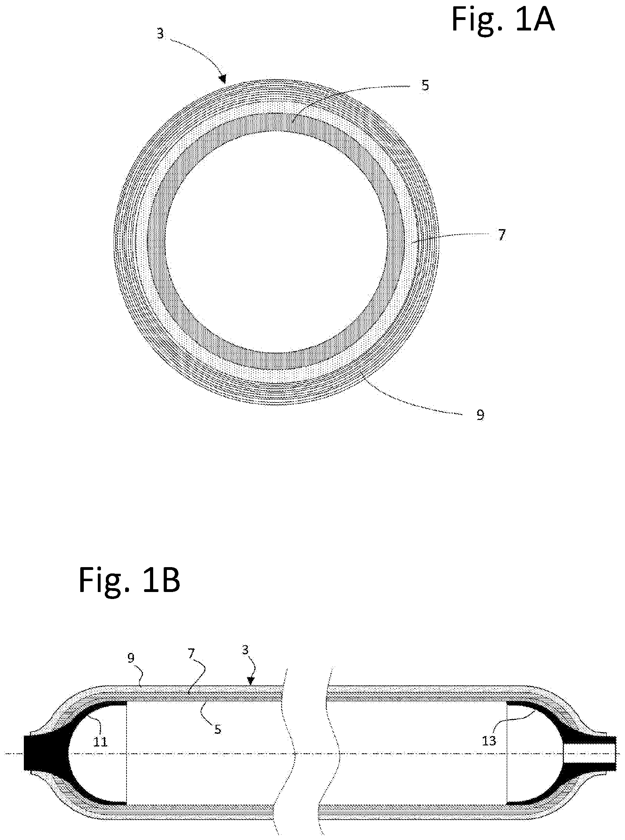

La figure 1A est une vue en coupe transversale d'un réservoir en matériau composite conforme à un premier mode de réalisation de l'invention. On peut observer que la paroi composite 3 du réservoir présente une section transversale circulaire. Cette paroi 3 comprend tout d'abord un élément tubulaire multicouche constitué d'un tube en plastique 5 revêtu d'une première couche 7 en matériau composite. Une fonction du tube 5 est d'assurer une bonne étanchéité au fluide contenu dans le réservoir. A cet effet, dans le présent exemple, le tube 5 est réalisé en thermoplastique. De manière avantageuse, la résine utilisée dans le matériau composite dont est faite la couche 7 peut également être du thermoplastique. Selon une variante préférée de l'invention, la couche 7 est constituée de fibres de carbone noyées dans une matrice thermoplastique. Les fibres de carbone sont parallèles les unes aux autres et sont orientées dans la direction de l'axe longitudinal du réservoir. En conséquence, on appellera ci-après la couche 7 en matériau composite la couche longitudinale. L'élément tubulaire multicouche est lui-même enveloppé dans une deuxième couche en matériau composite 9, appelée ci-après la couche circonférentielle 9. Cette couche est formée de fibres de carbone enroulées parallèlement les unes aux autres autour de l'élément tubulaire. Les fibres de la couche 9 sont enroulées circonférentiellement ou, autrement dit, sensiblement perpendiculairement à l'axe du réservoir. Elles sont également noyées dans une matrice thermoplastique. On comprendra de ce qui précède que la paroi 3 du réservoir illustré dans la figure 1A est constituée de trois couches. Toutefois, conformément à d'autres modes de réalisation, le réservoir de l'invention peut comporter un plus grand nombre de couches. En particulier, le réservoir de l'invention peut comporter une couche composite additionnelle, en fibres de verre par exemple, servant de couche extérieure de protection.

La figure 1B est une vue partielle en coupe longitudinale du réservoir de la figure 1A. Ce réservoir peut avoir une longueur considérable. En effet, comme on le verra plus en détail plus loin, certains avantages de la présente invention se révèlent d'autant plus profitables que le réservoir est plus long relativement à son diamètre. En raison de la longueur considérable du réservoir du présent exemple, la vue partielle de la figure 1B n'en montre que les deux extrémités avec une coupure entre le deux. On peut voir que chaque extrémité du réservoir comporte un embout 11, 13. Cet embout est de préférence métallique, par exemple en alliage d'aluminium. Dans l'exemple illustré, les deux embouts présentent tous les deux une forme généralement en ogive, et ils sont chacun insérés coaxialement dans une extrémité de l'élément tubulaire multicouche. La surface extérieure convexe de chaque embout en ogive est orientée vers l'extérieur du réservoir. La figure 1B montre encore qu'un des embouts présente une petite ouverture centrale prévue pour le fluide sous pression. L'autre embout, qui est dépourvu d'ouverture, constitue le fond du réservoir. Enfin, les figures 1A et 1B montrent encore que la paroi composite 3 présente la forme générale d'un cylindre qui s'étend axialement entre les deux embouts 11, 13.

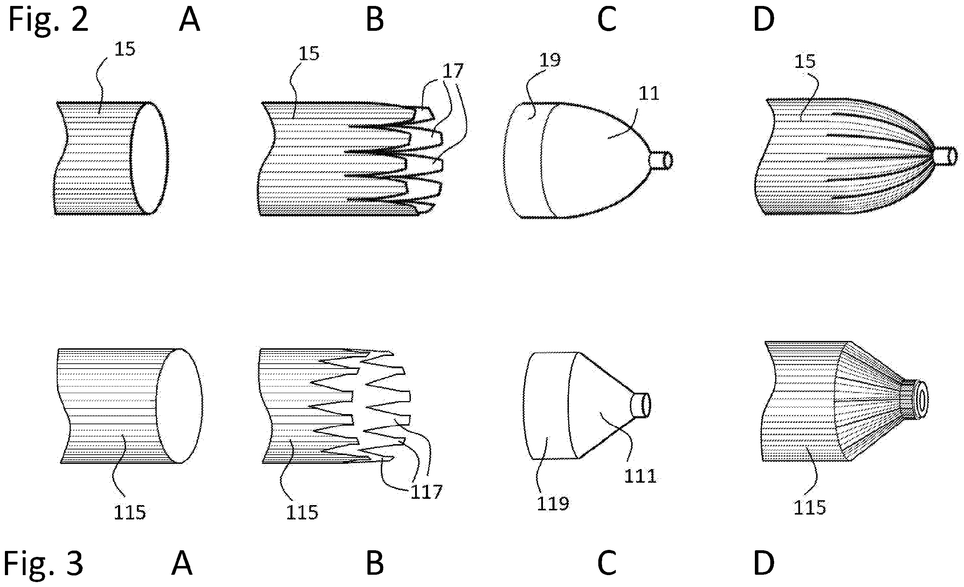

Conformément à l'invention, le profil de la paroi 3 présente une contracture à chacune de ses extrémités, de sorte que la paroi vient se plaquer contre une portion convexe de la surface extérieure de chacun des embouts. A titre d'exemple, les figures 2 et 3 illustrent une manière possible pour donner une telle configuration aux extrémités d'un réservoir selon l'invention. Comme le montre ces deux figures, les extrémités de la paroi de l'élément tubulaire 15 peuvent être munies chacune d'une rangée d'onglets (qui sont respectivement référencés 17 et 117 dans les figures 2 et 3), Lors de la réalisation du réservoir, une fois un des embouts insérés dans l'extrémité dentelée correspondante de l'élément tubulaire 15, les onglets sont rabattus sur la surface extérieure convexe de l'embout de manière à former une contracture d'extrémité.

C'est essentiellement la forme de l'embout qui différencie les éléments représentés dans la figure 3 de ceux représentés la figure 2. En se référant plus particulièrement à la figure 2, on peut voir que l'embout représenté (référencé 11) présente une forme généralement en ogive et qu'il est muni d'une ouverture centrale conformément à ce qui a déjà été décrit en relation avec la figure 1B. On peut voir encore que l'embout 11 comporte également une portion 19 de forme cylindrique qui prolonge le rebord de l'ogive en direction de l'intérieur du réservoir. La figure 2 montre en outre que les onglets 17 que présente l'extrémité de la paroi de l'élément tubulaire 15, ont des bords arrondis. On comprendra que la forme arrondie des onglets découle de la forme bombée de la paroi extérieure de l'embout 11. En effet, la forme des onglets est choisie de manière à permettre, d'une part, de les rabattre contre la surface extérieure convexe de l'embout 11 sans qu'ils ne se chevauchent, et d'autre part, de manière à ce que les onglets rabattus recouvrent de préférence la surface convexe sans laisser d'interstices non recouverts.

En se référant maintenant à la figure 3, on peut voir que l'embout représenté (référencé 111) présente la forme générale d'un cône muni d'une ouverture centrale. Comme dans l'exemple précédent, l'embout 111 comporte encore une portion 119 de forme cylindrique qui prolonge le rebord du cône en direction de l'intérieur du réservoir. La figure 3 montre en outre que les onglets 117 que présente l'extrémité de la paroi de l'élément tubulaire 15 sont en forme de triangles ou de trapèzes isocèles. Ici aussi, la forme triangulaire des onglets découle de la forme de la paroi extérieure de l'embout 111. En effet, la forme des onglets est choisie de manière à permettre, d'une part, de les rabattre contre la surface extérieure conique de l'embout 111 sans qu'ils ne se chevauchent, et d'autre part, de manière à ce que les onglets rabattus recouvrent de préférence la surface conique sans laisser subsister d'interstices non recouverts. On comprendra toutefois que, conformément à d'autres modes de réalisation non représentés de l'invention, les onglets pourraient se chevaucher ou, à l'inverse, laisser subsister des espaces non recouverts important entre deux onglets. Nous reviendrons aux figures 2 et 3 plus avant en relation avec un procédé inventif pour réaliser le réservoir de l'invention.

En se référant à nouveau à la figure 1B, on peut comprendre que la pression interne du réservoir à tendance à repousser les embouts 11, 13 axialement vers l'extérieur du réservoir. Dans ces conditions, la partie périphérique de la surface extérieure de chacun des embouts 11, 13 vient se caler contre une des contractures d'extrémité de la paroi 3 du réservoir. De manière à garantir la rigidité de la structure, des moyens sont de préférence prévus pour assurer l'adhésion des onglets 17, 117 sur la surface extérieure convexe de chacun des embouts 11, 13. De plus, de manière à assurer l'étanchéité du joint entre l'élément tubulaire 15 et les deux embouts, des moyens sont de préférence également prévus pour assurer l'adhésion de la paroi intérieure de l'élément tubulaire 15 sur le pourtour de la partie cylindrique 19, 119 de chaque embout.

Comme on l'a déjà mentionné, la couche intérieure 5 de l'élément tubulaire 15 du réservoir illustré dans les figures 1A et 1B est constituée par un tube 5 en thermoplastique. Un avantage des résines thermoplastiques en comparaison avec les résines thermodurcissables est que, en viellissant, les liners en thermoplastique conservent plus longtemps leurs étanchéités. En effet, les thermoplastiques sont normalement plus élastiques que les résines durcies thermiquement, et ils supportent donc mieux les nombreux cycles de pressurisation/dépressurisation qui rythment la vie d'un réservoir.

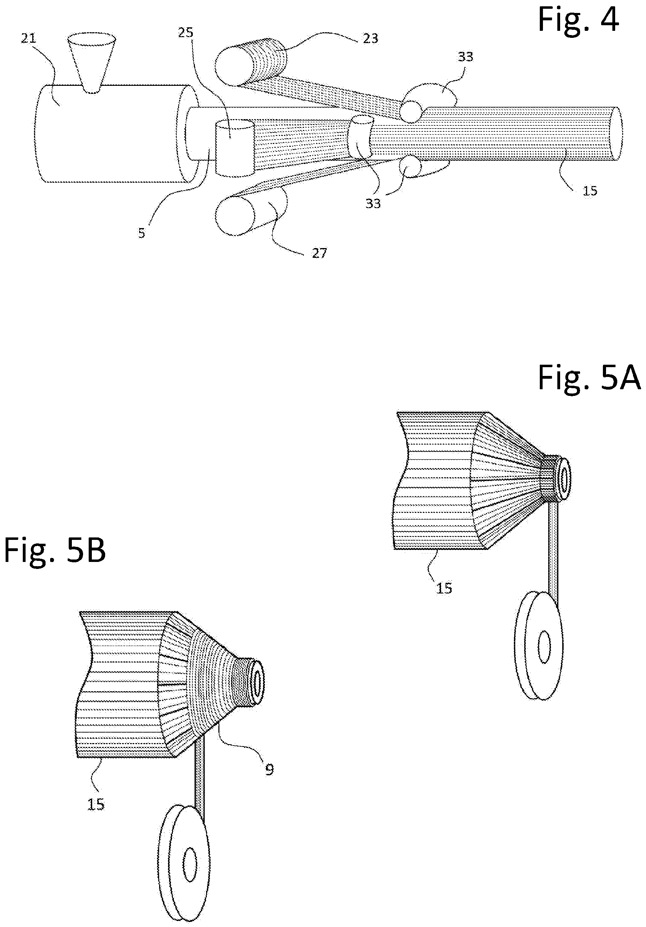

Les figures 3 à 5B illustrent différentes étapes d'un procédé de réalisation d'un réservoir conforme à l'invention. Pour commencer, la figure 4 illustre un mode particulier de mise en œuvre des premières étapes du procédé de l'invention. Dans la figure 4, on peut voir tout d'abord une extrudeuse (référencée 21) agencée pour produire le tube profilé 5, et qui est associée à quatre dévidoirs arrangés respectivement en dessus, en dessous, derrière et devant l'axe longitudinal du tube profilé 5. Trois dévidoirs (respectivement référencés 23, 25 et 27) sont visibles dans la figure 4, et on comprendra que le quatrième dévidoir, qui est situé derrière l'installation, est masqué. On peut voir encore sur la figure 4 qu'un rouleau (référencé 33) est associé à chacun des dévidoirs.

Chaque dévidoir est essentiellement constitué d'une bobine large sur laquelle est enroulé un grand nombre de fibres parallèles. Comme le montre la figure 4, les fibres parallèles sont bobinées de manière à former un faisceau plat lorsqu'on les déroule ensemble à partir du dévidoir. Le faisceau plat présente une largeur constante et une faible épaisseur. Dans l'exemple illustré, la largeur des faisceaux plats issus de chacun des dévidoirs 23, 25, 27 est presque égale au diamètre du tube en plastique. Dans ces conditions, un unique faisceau plat suffit pour recouvrir environ un quart de la circonférence du tube 5. C'est la raison pour laquelle l'installation de la figure 4 ne comporte que quatre dévidoirs. On comprendra toutefois qu'il est également possible d'utiliser des dévidoirs fournissant des faisceaux plats de moindre largeur. Naturellement, dans ce cas, le nombre de dévidoirs arrangés autour de l'axe longitudinal du tube profilé 5 devra être supérieur à quatre.

Conformément à l'invention, l'élément tubulaire 15 est formé d'un tube profilé en plastique 5 recouvert de fibres rectilignes orientées dans la direction longitudinale du tube profilé. La figure 4 illustre la fabrication d'un élément tubulaire conformément à un mode particulier de mise en œuvre du procédé de l'invention. A cet effet, l'installation de la figure 4 permet tout d'abord de produire par extrusion le tube profilé 5 en plastique, et permet également d'apposer dans la foulée des rangées de towpregs ou de rubans de fibres préimprégnées sur la paroi extérieure du tube 5 pour constituer la couche longitudinale 7.

En se référant toujours à la figure 4, on peut voir comment les rouleaux 33 de l'installation représentée permettent de guider et de presser les faisceaux plats de fibres contre la paroi extérieure du tube 5, de manière à ce qu'ils viennent recouvrir entièrement la paroi au fur et à mesure de l'avancement du tube profilé hors de l'extrudeuse 21. On a déjà mentionné plus haut que, conformément à une variante préférée de l'invention, les fibres formant la couche longitudinale 7 sont imprégnées d'une résine thermoplastique. La résine doit donc être chauffée pour pouvoir être travaillée. En conséquence, dans le cas où les fibres sont imprégnées d'une résine thermoplastique, l'installation de la figure 4 comporte encore un dispositif de chauffage (non représenté) pour amener la zone de rencontre entre la surface du tube et les fibres, à une température proche de la température de fusion de résine, de manière à assurer une bonne soudure des fibres sur le tube 5.

Dans le cas où la résine utilisée est une résine thermodurcissable, la formation de la couche longitudinale 7 peut généralement être réalisée à froid. Précisons encore que, l'invention ne se limite pas à l'utilisation de fibres préimprégnées. En effet, de façon connue en soi, il existe deux autres grandes catégories de méthodes pour appliquer des fibres imprégnées de résine. Une première catégorie connue sous le nom d'enroulement en voie humide (wet winding method) consiste à imprégner les fibres de résine liquide juste avant de les déposer sur la surface à recouvrir. On peut obtenir ce résultat par exemple en faisant passer les fibres dans un bain intercalé entre les dévidoirs et le tube en plastique à revêtir. L'autre méthode est connue sous le nom d'enroulement en voie sèche (dry winding method).Dans ce cas, l'imprégnation par une résine intervient ultérieurement.

L'élément tubulaire 15 produit par l'installation de la figure 4 doit ensuite être débité en tronçons de la longueur désirée pour réaliser le réservoir de l'invention. Une fois l'élément tubulaire 15 réalisé, l'étape suivante consiste à assembler cet élément et les deux embouts d'extrémités 11, 13. Conformément au mode de mise en œuvre particulier qui est illustré dans les figures 2 et 3, on découpe tout d'abord des entailles équidistantes dans l'extrémité de la paroi de l'élément tubulaire, de manière à former une couronne d'onglets. Deux onglets voisins sont donc toujours séparés par une entaille et, comme on peut le voir notamment sur les figures 2B et 3B, les entailles sont de forme effilée et elles sont orientées parallèlement dans la direction de l'axe longitudinal de l'élément tubulaire. Grâce à cette caractéristique, les fibres rectilignes de la couche longitudinale 7 de l'élément tubulaire s'étendent jusqu'à l'extrémité de chaque onglet parallèlement à l'axe longitudinal des onglets. Cette disposition donne aux onglets une grande résistance à la traction en direction longitudinale. Conformément à l'invention, il peut y avoir un nombre quelconque d'onglets. Toutefois, de manière à limiter la quantité de travail et donc le coût, le nombre d'onglets devrait être minimum. En revanche, un nombre trop faible d'onglets conduit à l'apparition de facettes indésirables à proximités des extrémités du réservoir. Le nombre d'onglets ne devrait donc pas être trop petit. A titre d'exemple, la denture réalisée dans la figure 2 comporte 10 onglets.

Une fois la rangée d'onglets réalisée, on place un embout 11, 13 à l'intérieur de chacune des extrémités de l'élément tubulaire 15. On comprendra que le diamètre de la partie cylindrique 19 ou 119 des embouts est choisi de manière à ce que la dimension des embouts soit bien ajustée à celle des ouvertures circulaires dans l'élément tubulaire 15, de manière à ce que les axes des embouts soit bien alignés avec l'axe longitudinal de l'élément tubulaire 15. Les embouts sont de préférence positionnés axialement de manière à ce que la limite entre leur portion cylindrique et leur portion convexe se situe environ en regard de l'extrémité des entailles effilées séparant les onglets. Une fois les embouts 11, 13 positionnés dans les extrémités de l'élément tubulaire 15, on rabat les onglets 17 ou 117 contre la surface extérieure de la partie convexe des embouts, de sorte qu'on obtient un assemblage similaire à celui qui est illustré dans la figure 2D ou à celui illustré dans la figure 3D. Pour faciliter cette dernière opération, on peut chauffer les onglets de manière à ramollir la résine thermoplastique. Pour assurer une bonne adhésion des embouts avec la surface intérieure de l'élément tubulaire 15, ainsi qu'avec les onglets 17 ou 117, on peut faire subir un traitement préalable à la surface extérieure des embouts. Ce traitement de surface peut être par exemple un flammage, un traitement au plasma, un traitement chimique, un traitement mécanique, etc.

Dans le cas d'embouts en métal, au lieu d'avoir recours à un traitement de surface conformément à une variante avantageuse de l'invention, une couche de thermoplastique (non représentée) est surmoulée sur chacun des embouts en métal. De plus, le thermoplastique qui est surmoulé sur les embouts est de préférence de la même variété que le matériau thermoplastique dont est fait le tube en plastique 5. Il peut s'agir par exemple de PE, de PP, de PET, de PA, de PVDF ou de PPS. Cette caractéristique présente l'avantage de permettre de souder solidement la paroi intérieure de l'élément tubulaire et les onglets sur la paroi extérieure des embouts simplement par chauffage. De plus, lors de l'opération de soudage, les entailles entre les onglets se referment et les onglets sont également soudés entre eux. On comprendra que, pour garantir une bonne étanchéité du réservoir, l'opération de soudage ne se limite de préférence pas à souder les onglets sur la partie convexe des embouts, mais consiste également à souder une portion de la paroi intérieure de l'élément cylindrique sur la partie cylindrique 19 ou 119 des embouts.

Une fois les embouts 11, 13 et l'élément tubulaire 15 assemblés et soudés, l'étape suivante consiste à enrouler circonférentiellement des fibres imprégnées de résine autour de l'élément tubulaire 15 et des embouts 11 et 13 pour former la couche circonférentielle 9 du réservoir. Les figures 5A et 5B sont des représentations schématiques qui illustrent le principe de l'enroulement circonférentiel. Dans l'exemple illustré, on enroule un faisceau plat de towpregs ou de bandes de fibres circonférentiellement en commençant par l'extrémité d'un des embouts, et on avance progressivement le long du réservoir de manière à le recouvrir complètement. En se référant encore aux figures 5A et 5B, on peut comprendre que lorsque le towpreg ou les bandes de fibres sont enrouléd autour de la partie de l'embout qui va en s'amincissant en direction de l'extérieur, la largeur du towpreg ou des bandes de fibres doit être suffisamment faible pour que le towpreg ou les bandes de fibres puissent s'accommoder de la variation de la circonférence de l'embout entre un bord et l'autre du towpreg ou d'une bande de fibres. Conformément à l'invention, la couche circonférentielle 9 ainsi formée comprend au moins une couche de fibres enroulées circonférentiellement. Toutefois, de manière avantageuse, la couche 9 peut comporter plusieurs couches de fibres enroulées circonférentiellement. Ainsi, une fois le réservoir complètement recouvert d'une première couche de fibres enroulées circonférentiellement, on peut de préférence enrouler au moins une deuxième couche par-dessus la première.

Comme on l'a déjà mentionné en relation avec la figure 1B, la pression interne du réservoir à tendance à repousser les embouts 11, 13 axialement vers l'extérieur du réservoir. La pression a donc également tendance à écarter les onglets qui ont été rabattus sur la surface extérieure des embouts. Dans ces conditions, les fibres enroulées circonférentiellement autour de l'élément tubulaire 15 permettent d'éviter que les onglets ne se désolidarisent les uns des autres et des embouts. En effet, les fibres circonférentielles qui entourent les embouts maintiennent les onglets plaqués contre la surface extérieure de ces derniers.

Selon une variante de mise en œuvre particulière du procédé de l'invention, une fois la couche circonférentielle formée, le réservoir rempli de fluide sous pression est placé dans un contre-moule et chauffé de manière à homogénéiser chacune des couches 5, 7 et 9 et à les lier entre elles.

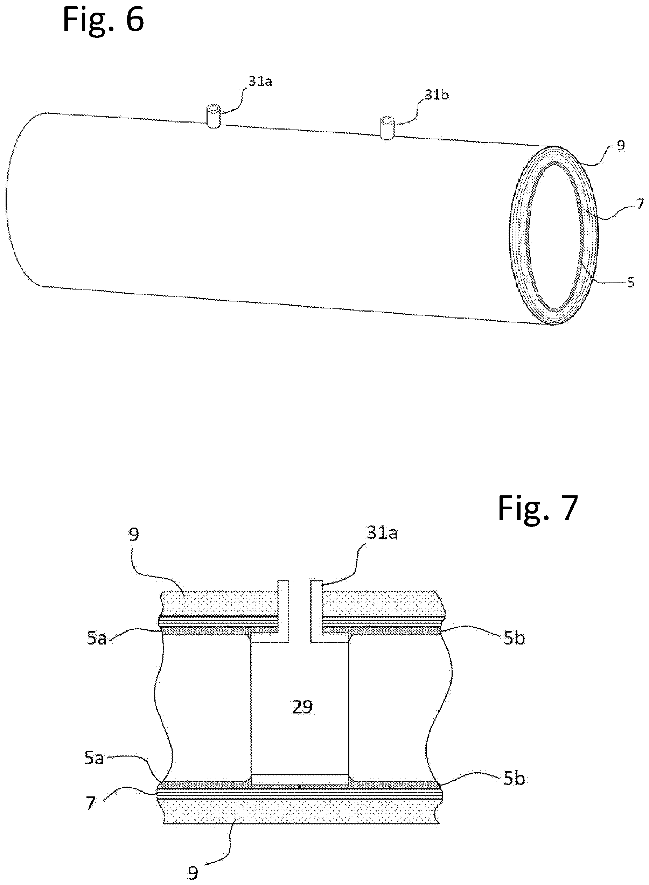

Les figures 6 et 7 concernent un réservoir long qui correspond à une première variante d'un deuxième mode de réalisation de l'invention. Le réservoir illustré dans les figures 6 et 7 présente la particularité de comporter des bagues intérieures munies chacune d'un conduit en saillie par lequel passe un orifice communiquant avec l'extérieur. Ce conduit est prévu pour recevoir un dispositif de surpression (Pressure Relief Device). La figure 6 est une vue partielle en perspective qui montre un tronçon médian d'un réservoir qui comporte deux conduits en saillie 31a, 31b pour des dispositifs de surpression.

La figure 7 est une vue partielle en coupe du réservoir de la figure 6 montrant une bague intérieur 29 qui porte le conduit en saillie 31a. Abstraction faite de la présence des bagues intérieures et des conduits associés, un réservoir conforme au deuxième mode de réalisations de l'invention peut être identique à un réservoir conforme au premier mode de réalisation. Conformément à ce qui a été décrit en rapport avec le premier mode de réalisation, la paroi du réservoir des figures 6 et 7 est constituée de trois couches. Ces couches sont une couche intérieure constituée par un tube en plastique 5, une première couche 7 en matériau composite appelée couche longitudinale, enveloppant le tube 5 et formée de fibres de carbone orientées parallèlement à l'axe longitudinal du réservoir, et enfin une deuxième couche en matériau composite appelée la couche circonférentielle 9 formée de fibres de carbone enroulées circonférentiellement autour de la couche 7. En se référant plus particulièrement à la figure 7, on peut comprendre que dans la première variante du deuxième mode de réalisation, la couche 5 est en réalité constituée de l'assemblage de deux tubes en plastique 5a et 5b qui sont raccordés l'un à l'autre, bout à bout, au niveau de la bague intérieure 29.

De manière analogue à ce qui a été décrit plus haut concernant les embouts 11, 13, la bague intérieure 29 peut subir un traitement de surface préalable. Altermativement, conformément à une variante avantageuse de l'invention, la bague intérieure 29 n'est pas entièrement réalisée en métal. En effet, une couche (non représentée) de la même matière thermoplastique dont sont faits les tubes 5a et 5b est de préférence surmoulée sur la paroi extérieure de la bague. Cette caractéristique présente l'avantage de permettre de souder de manière étanche la paroi intérieure des tubes 5a et 5b sur la paroi extérieure de la bague 21. Selon cette première variante du deuxième mode de réalisation de l'invention, Ce n'est de préférence qu'une fois que les tubes 5a et 5b ont été raccordés au moyen de la bague intérieure 29 qu'ils sont revêtus de fibres orientées selon l'axe longitudinal du réservoir, de manière à former la couche longitudinale. On comprendra que les conduits 31a et 31b constituent des obstacles lors de la pose des fibres longitudinales. Toutefois, ces obstacles sont de dimensions réduites et il est possible de les contourner sans que les fibres ne dévient significativement de leur trajectoire.

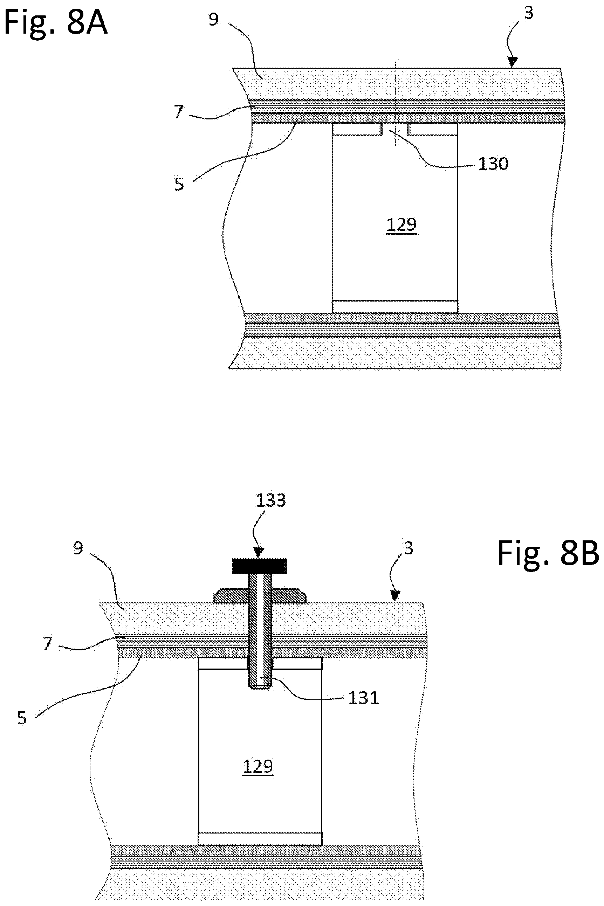

Les figures 8A et 8B sont des vues partielles en coupe longitudinale semblables à la figure 7, mais montrant un réservoir selon une deuxième variante du deuxième mode de réalisation de l'invention. En se référant tout d'abord à la figure 8A, on peut voir que, contrairement à ce qui est représenté dans la figure 7, la bague intérieure 129 de la figure 8A ne porte pas de conduit faisant saillie à l'extérieur du réservoir. En effet, conformément à cette deuxième variante, la bague 129 comporte un trou taraudé 130 en lieu et place du conduit de la première variante. On comprendra que, comme la paroi extérieure de la bague intérieure 129 est dépourvue de partie saillante, il est possible de l'insérer dans le tube en plastique 5 par une de ses extrémités.

La figure 8B est une vue partielle en coupe transversale semblable à la figure 8A, mais montrant le réservoir terminé et équipé d'un dispositif de surpression 133. Pour passer de la figure 8A à la figure 8B, on peut procéder de la manière suivante. Une fois la couche longitudinale 7 et la couche circonférentielle 9 du réservoir réalisées, on pratique une ouverture à travers la paroi du réservoir de manière à donner accès au trou taraudé 130 de la bague intérieure 129. On insert ensuite un conduit 131 de faible longueur dans l'ouverture, de sorte que le conduit fait saillie en dehors du réservoir. Dans le présent exemple, une des extrémités du conduit 131 est filetée de manière à permettre de visser le conduit dans le trou 130 de la bague intérieure. Le dispositif de surpression 133 est ensuite fixé au conduit 131 et à la paroi du réservoir en procédant de la même manière que pour la première variante illustrée dans les figures 6 et 7.

On comprendra en outre que diverses modifications et/ou améliorations évidentes pour un homme du métier peuvent être apportées au mode de réalisation qui fait l'objet de la présente description sans sortir du cadre de la présente invention définie par les revendications annexées.

## Revendications

1. Réservoir en matériau composite pour contenir un fluide sous pression, le réservoir comportant un élément tubulaire (15), deux embouts (11, 13 ; 111) respectivement insérés dans les extrémités de l'élément tubulaire, et une couche circonférentielle (9) formée de fibres enroulées et imprégnées de résine, la couche circonférentielle enveloppant l'élément tubulaire et les embouts, un tronçon au moins de chacun des embouts (11, 13 ; 111) ayant une forme qui va en s'amincissant en direction de l'extérieur, et la paroi de l'élément tubulaire (15) présentant une contracture à chacune de ses extrémités, de sorte qu'à chaque extrémité, la paroi vient se plaquer contre la surface du tronçon dont la forme va en s'amincissant ; l'élément tubulaire (15) comportant un tube en plastique (5) et une couche longitudinale (7), le tube en plastique étant revêtu de la couche longitudinale et cette dernière étant essentiellement constituée de fibres agencées parallèlement dans une matrice de résine, les fibres parallèles étant orientées dans la direction de l'axe longitudinal du tube en plastique (5) ; et les fibres enroulées de la couche circonférentielle (9) étant enroulées circonférentiellement autour de l'élément tubulaire (15) et des embouts (11, 13), parallèlement les unes aux autres.

2. Réservoir en matériau composite conforme à la revendication 1, dans lequel les extrémités de la paroi de l'élément tubulaire (15) sont dentelées de manière à présenter chacune une rangée d'onglets (17; 117), les onglets étant rabattus sur les embouts (11, 13 ; 111) de manière constituer les contractures.

3. Réservoir en matériau composite conforme à la revendication 1 ou 2, dans lequel l'élément tubulaire (15) est de forme cylindrique.

4. Réservoir en matériau composite conforme à l'une quelconque des revendications 1, 2 et 3, dans lequel les deux embouts (11, 13; 111) sont réalisés en métal ou en un matériau composite.

5. Réservoir en matériau composite conforme à l'une quelconque des revendications précédentes dans lequel la forme du dit tronçon de chacun des embouts (111), ayant une forme qui va en s'amincissant en direction de l'extérieur, est une forme conique ou tronconique.

6. Réservoir en matériau composite conforme à l'une quelconque des revendications 1 à 4, dans lequel la forme du dit tronçon de chacun des embouts (11, 13), ayant une forme qui va en s'amincissant en direction de l'extérieur, est une forme convexe ou paraboloïde.

7. Réservoir en matériau composite conforme à l'une quelconque des revendications précédentes, dans lequel chacun des embouts (11, 13 ; 111) comporte également une portion tubulaire (19; 119) présentant une section complémentaire à la section transversale de l'élément tubulaire, la portion tubulaire prolongeant l'embout en direction de l'intérieur du réservoir, à partir du tronçon ayant une forme qui va en s'amincissant en direction de l'extérieur.

8. Réservoir en matériau composite conforme à l'une quelconque des revendications précédentes, dans lequel les embouts (11, 13 ; 111) sont en métal, une couche de thermoplastique étant surmoulée sur chacun des embouts.

9. Réservoir en matériau composite conforme à l'une quelconque des revendications précédentes, dans lequel il comporte au moins une bague intérieure (29) associée à un conduit saillant (31a, 31b ; 131) dépassant hors du réservoir, et adapté pour recevoir un dispositif de surpression (133).

10. Procédé pour réaliser un réservoir en matériau composite conforme à l'une des revendications précédentes, le procédé comportant les étapes de :
a. Se munir d'un tube profilé (5) en plastique ;
b. Recouvrir la paroi extérieure du tube (5) en plastique de fibres parallèles imprégnées de résine, les fibres parallèles étant rectilignes et orientées dans la direction longitudinale du tube profilé ;
c. Insérer les embouts (11, 13) dans les extrémités de l'élément tubulaire (15) ;
d. Déformer la paroi à chacune des extrémités de l'élément tubulaire (15) de manière à conformer les extrémités de l'élément tubulaire à la forme des embouts (11, 13 ; 111).
e. Enrouler circonférentiellement des fibres imprégnées de résine autour de l'élément tubulaire (15) et des embouts (11, 13 ; 111) pour former la couche circonférentielle (9) du réservoir.

11. Procédé selon la revendication 10 pour réaliser un réservoir en matériau composite, **caractérisé en ce qu'**il est mis en œuvre sur une ligne d'extrusion comportant une extrudeuse (21) et une pluralité de dévidoirs (23, 25, 27) agencés pour dérouler parallèlement des towpregs ou des rubans de fibres imprégnées de résine, et **en ce qu'**on réalise l'étape (a) de « se munir d'un tube profilé (5) en plastique » en produisant ledit tube profilé en matière plastique par extrusion, et **en ce qu'**on réalise l'étape (b) de « recouvrir la paroi extérieure du tube (5) en plastique de fibres parallèles imprégnées de résine » en rapportant sur la paroi extérieur du tube (5) les towpregs ou les rubans de fibres tirés des dévidoirs.

12. Procédé selon la revendication 11 pour réaliser un réservoir en matériau composite, **caractérisé en ce que** les étapes (a) et (b) sont mises en œuvre en ligne.

13. Procédé selon l'une quelconque des revendications 10, 11 et 12, **caractérisé en ce qu'**il comporte entre l'étape b et l'étape c, une étape b' consistant à découper des entailles équidistantes dans l'extrémité de la paroi de l'élément tubulaire (15), de manière à former une couronne d'onglets (17 ; 117).

14. Procédé selon l'une quelconque des revendications 10 à 13, **caractérisé en ce que** durant l'étape a, on se munit d'au moins deux tubes profilés (5a, 5b) en plastique, et **en ce que** le procédé comporte, entre l'étape a et l'étape b, une étape a' consistant à raccorder l'un à l'autre les deux tube profilés, bout à bout, à l'aide d'une bague intérieure (29) munie d'un conduit en saillie (31 a, 31b).

15. Procédé selon l'une quelconque des revendications 10 à 13, **caractérisé en ce qu'**il comporte, avant l'étape c, une étape b" consistant à insérer une bague intérieure (129) comportant un perçage (130) à l'intérieur du tube profilé (5), par une de ses extrémités, et **en ce qu'**il comporte, après l'étape e, une étape consistant d'abord à pratiquer une ouverture à travers la paroi (3) du réservoir de manière à donner accès au perçage (130), et ensuite à insérer un conduit (131) dans l'ouverture, de sorte que le conduit fait saillie en dehors du réservoir.

## Patentansprüche

1. Tank aus Verbundmaterial für die Aufnahme eines Fluids unter Druck, wobei der Tank ein rohrförmiges Element (15), zwei Ansätze (11, 13; 111), die jeweils in den Enden des rohrförmigen Elements eingesetzt sind, und eine Umfangsschicht (9) umfasst, die aus aufgewickelten und mit Harz imprägnierten Fasern gebildet ist, wobei die Umfangsschicht das rohrförmige Element und die Ansätze einhüllt, mindestens ein Teilstück von jedem der Ansätze (11, 13; 111) eine Form aufweist, die in Richtung nach außen schmaler wird, und die Wand des rohrförmigen Elements (15) eine Verengung an jedem seiner Enden aufweist, derart, dass an jedem Ende die Wand sich gegen die Fläche des Teilstücks drückt, dessen Form schmaler wird;
wobei das rohrförmige Element (15) ein Kunststoffrohr (5) und eine Längsschicht (7) umfasst, wobei das Kunststoffrohr mit der Längsschicht verkleidet ist und diese letztere im Wesentlichen aus Fasern besteht, die in einer Harzmatrix parallel angeordnet sind, wobei die parallelen Fasern in der Richtung der Längsachse des Kunststoffrohrs (5) ausgerichtet sind;
wobei die aufgewickelten Fasern der Umfangsschicht (9) in Umfangsrichtung um das rohrförmige Element (15) und die Ansätze (11, 13) parallel zueinander gewickelt sind.

2. Tank aus Verbundmaterial nach Anspruch 1, wobei die Enden der Wand des rohrförmigen Elements (15) derart gezahnt sind, dass sie jeweils eine Reihe von keilförmigen Ausschnitten (17; 117) aufweisen, wobei die keilförmigen Ausschnitte derart auf den Ansätzen (11, 13; 111) umgeklappt sind, dass sie die Verengungen bilden.

3. Tank aus Verbundmaterial nach Anspruch 1 oder 2, wobei das rohrförmige Element (15) zylinderförmig ist.

4. Tank aus Verbundmaterial nach einem der Ansprüche 1, 2 und 3, wobei die zwei Ansätze (11, 13; 111) aus Metall oder aus einem Verbundmaterial ausgeführt sind.

5. Tank aus Verbundmaterial nach einem der vorhergehenden Ansprüche, wobei die Form des Teilstücks von jedem der Ansätze (111), das eine Form aufweist, die in Richtung nach außen schmaler wird, eine kegel- oder stumpfkegelartige Form ist.

6. Tank aus Verbundmaterial nach einem der Ansprüche 1 bis 4, wobei die Form des Teilstücks von jedem der Ansätze (11, 13), das eine Form aufweist, die in Richtung nach außen schmaler wird, eine konvexe oder parabolische Form ist.

7. Tank aus Verbundmaterial nach einem der vorhergehenden Ansprüche, wobei jeder der Ansätze (11, 13; 111) auch einen rohrförmigen Abschnitt (19; 119) umfasst, der einen Querschnitt aufweist, der sich mit dem Querschnitt des rohrförmigen Elements ergänzt, wobei der rohrförmige Abschnitt den Ansatz in Richtung des Inneren des Tanks ausgehend von dem Teilstück verlängert, das eine Form aufweist, die in Richtung nach außen schmaler wird.

8. Tank aus Verbundmaterial nach einem der vorhergehenden Ansprüche, wobei die Ansätze (11, 13; 111) aus Metall sind, wobei eine Thermoplastschicht auf jedem der Ansätze übergossen ist.

9. Tank aus Verbundmaterial nach einem der vorhergehenden Ansprüche, wobei er mindestens einen Innenring (29) umfasst, der einer hervorstehenden Leitung (31a, 31b; 131) zugehörig ist, die aus dem Tank hervorragt und angepasst ist, um eine Überdruckvorrichtung (133) aufzunehmen.

10. Verfahren zum Ausführen eines Tanks aus Verbundmaterial nach einem der vorhergehenden Ansprüche, wobei das Verfahren die folgenden Schritte umfasst:
a. Bereitstellen eines Profilrohrs (5) aus Kunststoff;
b. Bedecken der Außenwand des Kunststoffrohrs (5) mit parallelen, mit Harz imprägnierten Fasern, wobei die parallelen Fasern geradlinig und in der Längsrichtung des Profilrohrs ausgerichtet sind;
c. Einsetzen der Ansätze (11, 13) in die Enden des rohrförmigen Elements (15);
d. Verformen der Wand an jedem der Enden des rohrförmigen Elements (15) derart, dass die Enden des rohrförmigen Elements sich an die Form der Ansätze (11, 13; 111) anpassen;
e. Aufwickeln der mit Harz imprägnierten Fasern um das rohrförmige Element (15) und die Ansätze (11, 13; 111), um die Umfangsschicht (9) des Tanks zu bilden.

11. Verfahren nach Anspruch 10 zum Ausführen eines Tanks aus Verbundmaterial, **dadurch gekennzeichnet, dass** es auf einer Extrusionsstraße durchgeführt wird, die einen Extruder (21) und mehrere Haspeln (23, 25, 27) umfasst, die angeordnet sind, um mit Harz imprägnierte Towpregs oder Faserbänder parallel abzurollen, und dadurch, dass der Schritt (a) zum "Bereitstellen eines Profilrohrs (5) aus Kunststoff" durch Herstellen des Profilrohrs aus Kunststoff durch Extrudieren ausgeführt wird, und dadurch, dass der Schritt (b) zum "Bedecken der Außenwand des Kunststoffrohrs (5) mit parallelen, mit Harz imprägnierten Fasern" durch Auftragen der von den Haspeln gezogenen Towpregs oder Faserbänder auf der Außenwand des Rohrs (5) ausgeführt wird.

12. Verfahren nach Anspruch 11 zum Ausführen eines Tanks aus Verbundmaterial, **dadurch gekennzeichnet, dass** die Schritte (a) und (b) hintereinander durchgeführt werden.

13. Verfahren nach einem der Ansprüche 10, 11 und 12, **dadurch gekennzeichnet, dass** es zwischen dem Schritt b und dem Schritt c einen Schritt b' umfasst, der darin besteht, abstandsgleiche Einschnitte im Ende der Wand des rohrförmigen Elements (15) auszuschneiden, derart, dass eine Krone aus keilförmigen Ausschnitten (17; 117) gebildet wird.

14. Verfahren nach einem der Ansprüche 10 bis 13, **dadurch gekennzeichnet, dass** während des Schritts a mindestens zwei Profilrohre (5a, 5b) aus Kunststoff bereitgestellt werden, und dadurch dass das Verfahren zwischen dem Schritt a und dem Schritt b einen Schritt a' umfasst, der darin besteht, das eine von den zwei Profilrohren mittels eines Innenrings (29), der mit einer hervorstehenden Leitung (31a, 31b) versehen ist, stumpf mit dem anderen zu verbinden.

15. Verfahren nach einem der Ansprüche 10 bis 13, **dadurch gekennzeichnet**, das es vor dem Schritt c einen Schritt b'' umfasst, der darin besteht, einen Innenring (129), der eine Bohrung (130) umfasst, im Inneren des Profilrohrs (5) über eines seiner Enden einzusetzen, und dadurch, dass es nach dem Schritt e einen Schritt umfasst, der darin besteht, zuerst eine Öffnung durch die Wand (3) des Tanks herzustellen, derart, dass sich ein Zugang zur Bohrung (130) ergibt, und dann eine Leitung (131) in die Öffnung einzusetzen, derart dass die Leitung aus dem Tank hervorsteht.

## Claims

1. A composite material container for containing a pressurised fluid, the container comprising a tubular member (15), two tips (11, 13; 111) respectively inserted into the ends of the tubular member, and a circumferential layer (9) formed of resin-impregnated and wound fibres, the circumferential layer surrounding the tubular member and the tips, a section at least of each of the tips (11, 13; 111) having a shape which becomes thinner towards the outside, and the wall of the tubular member (15) has a narrowing at each of its ends, such that, at each end, the wall comes to be placed against the surface of the section which becomes thinner;
the tubular member (15) comprising a plastic tube (5) and a longitudinal layer (7), the plastic tube being coated with the longitudinal layer and this layer being formed essentially of fibres arranged in parallel in a resin matrix, the parallel fibres being oriented in the direction of the longitudinal axis of the plastic tube (5);
the wound fibres of the circumferential layer (9) being wound circumferentially, in parallel with each other, around the tubular member (15) and the tips (11, 13).

2. The composite material container according to claim 1, wherein the ends of the wall of the tubular member (15) are denticulate so as to each have a row of tabs (17; 117), the tabs being folded against the tips (11, 13; 111) so as to form the narrowings.

3. The composite material container according to claim 1 or 2, wherein the tubular member (15) is cylindrical in shape.

4. The composite material container according to any one of claims 1, 2 and 3, wherein the two tips (11, 13; 111) are formed of metal or of a composite material.

5. The composite material container according to any one of the preceding claims, wherein the shape of said section of each of the tips (111), having a shape which becomes thinner towards the outside, is conical or tapered.

6. The composite material container according to any one of claims 1 to 4, wherein the shape of said section of each of the tips (11, 13), having a shape which becomes thinner towards the outside, is convex or in the form of a paraboloid.

7. The composite material container according to any one of the preceding claims, wherein each of the tips (11, 13; 111) also has a tubular portion (19; 119) having a cross-section complementary to the transverse cross-section of the tubular member, the tubular portion extending towards the inside of the container, from the section having a shape which becomes thinner towards the outside.

8. The composite material container according to any one of the preceding claims, wherein the tips (11, 13; 111) are made of metal, a thermoplastic layer being over-moulded on each of the tips.

9. The composite material container according to any one of the preceding claims, wherein it comprises at least one inner ring (29) associated with a protruding conduit (31a, 31b; 131) extending out of the container, and adapted to receive a pressure relief device (133).

10. A method for forming a composite material container according to any one of the preceding claims, the method comprising the steps of:
a. providing a profiled, plastic tube (5);
b. covering the outer wall of the plastic tube (5) with parallel, resin-impregnated fibres, the parallel fibres being straight and oriented in the longitudinal direction of the profiled tube;
c. inserting the tips (11, 13) in the ends of the tubular member (15);
d. deforming the wall at each of the ends of the tubular member (15) so as to shape the ends of the tubular member to match the shape of the tips (11, 13; 111).
e. circumferentially winding the resin-impregnated fibres around the tubular member (15) and the tips (11, 13; 111) to form the circumferential layer (9) of the container.

11. The method according to claim 10 for forming a composite material container, **characterised in that** it is implemented on an extrusion production line comprising an extruder (21) and a plurality of reels (23, 25, 27) arranged to unwind, in parallel, towpregs or strips of resin-impregnated fibres, and **in that** step (a) of "providing a profiled, plastic tube (5)" is performed by producing said profiled, plastic tube by extrusion, and **in that** step (b) of "covering the outer wall of the plastic tube (5) with parallel, resin-impregnated fibres" is performed by attaching the towpregs or strips of fibres drawn from the reels to the outer wall of the tube (5).

12. The method according to claim 11 for forming a composite material container, **characterised in that** steps (a) and (b) are implemented in-line.

13. The method according to any one of claims 10, 11 and 12, **characterised in that** it comprises, between step b and step c, a step b' consisting of cutting equidistant notches into the end of the wall of the tubular member (15) so as to form a crown of tabs (17; 117).

14. The method according to any one of claims 10 to 13, **characterised in that**, during step a, there are provided at least two profiled, plastic tubes (5a, 5b), and **in that** the method comprises, between step a and step b, a step a' consisting of connecting the two profiled tubes together, end-to-end, using an inner ring (29) provided with a protruding conduit (31a, 31b)

15. The method according to any one of claims 10 to 13, **characterised in that** it comprises, before step c, a step b" consisting of inserting an inner ring (129) comprising a piercing (130) into the profiled tube (5) through one of its ends, and that it comprises, after step e, a step consisting of first providing an opening through the wall (3) of the container so as to provide access to the piercing (130) and then inserting a conduit (131) into the opening so that the conduit protrudes out of the container.
